# EUROPEAN PATENT APPLICATION

(11) **EP 2 295 350 A1**
(43) Date of publication of application: **16.03.2011**
(21) Application number: 10176514.7
(22) Date of filing: 14.09.2010
(51) Int. Cl.: B65G 47/14

(54) **Apparatus for unscrambling and aligning preforms**

(30) Priority: 14.09.2009 IT PR20090071
(71) Applicant: Lanfranchi S.R.L., 43044 Collecchio (Parma) (IT)
(72) Inventor: Lanfranchi, Mario, 43044 Collecchio (Parma) (IT)
(74) Representative: Dallaglio, Fabrizio

(57) **Abstract**

An apparatus (1) for unscrambling bulk preforms, of the type that comprises a disk (3) rotating about an axis inclined to the vertical, whereby the preforms (2) that come from a special feeder/hopper slide toward the bottom portion (4) where they are loaded into special pockets (6) and rotated to a top drop discharge area (12), from which they are transferred to a conveyor (15). The pockets (6) are formed in radial arrangement at the periphery of the disk (3), each having side walls (7) and a fixed or movable sliding surface (8) that supports the preforms (2) from below and an outside shell (9) to prevent the preform (2) from coming out of the pocket (6); specially sized guides (13) are formed on the bottom of the side walls (7).

## Description

### FIELD OF THE INVENTION

The present invention finds application in the field of bottling and particularly relates to an apparatus for unscrambling preforms that come in bulk form from a conveyor upstream from the line and adapted to unscramble and align said preforms on a downstream conveyor line.

### BACKGROUND OF THE INVENTION

Machines are known in the art that can carry out the above process in a rather satisfactory manner; nevertheless, drawbacks affect the prior art, in terms of throughput, which does not meet current market requirements. These unscrambling machines include a circular structure that contains a central disk for the preforms to be dropped thereon; the disk rotates about an axis inclined to the vertical, whereby the preforms slide toward the bottom portion of the disk - corresponding to the loading area - where they find a plurality of cradles disposed in tangential arrangement, around the outer periphery of the disk. Certain machines include two rings of cradles, arranged in tangential positions at the edge of the rotating disk.

Once the preforms reach their positions, they are held in the cradles and moved to the top portion of the cradle, from which they are dropped on and collected by a conveyor device, or come out from the cradle channel tangential to it; the drawbacks still relate to the working rate, which is also limited because the preforms have a certain length and only a small number thereof is present along the ring.

Examples of prior art unscramblers are disclosed in patents FR2850641, US4723661, US3254753 and US4312438.

These documents describe an apparatus for unscrambling bulk preforms, of the type that comprises a disk rotating about an axis inclined to the vertical, whereby the preforms that come from a special feeder/hopper slide toward the bottom portion where they are loaded into special pockets and rotated to a top drop discharge area, where they are transferred to a conveyor; such pockets being arranged in radial positions at the periphery of the disk.

### SUMMARY AND ADVANTAGES OF THE INVENTION

The object of the present invention is to provide an improved apparatus that can unscramble and align bulk preforms by a novel method of processing the preform that is transferred to a straightening disk.

Its advantages include a greater throughput with unscramblers of the same size, with a greater number of bottles produced per hour.

These objects and advantages are achieved by the apparatus for unscrambling and aligning preforms according to the present invention, which is characterized as set out in the annexed claims.

### BRIEF DESCRIPTION OF THE FIGURES

This and other features will be more apparent from the following description of a few embodiments, which are shown by way of example and without limitation in the accompanying drawings.

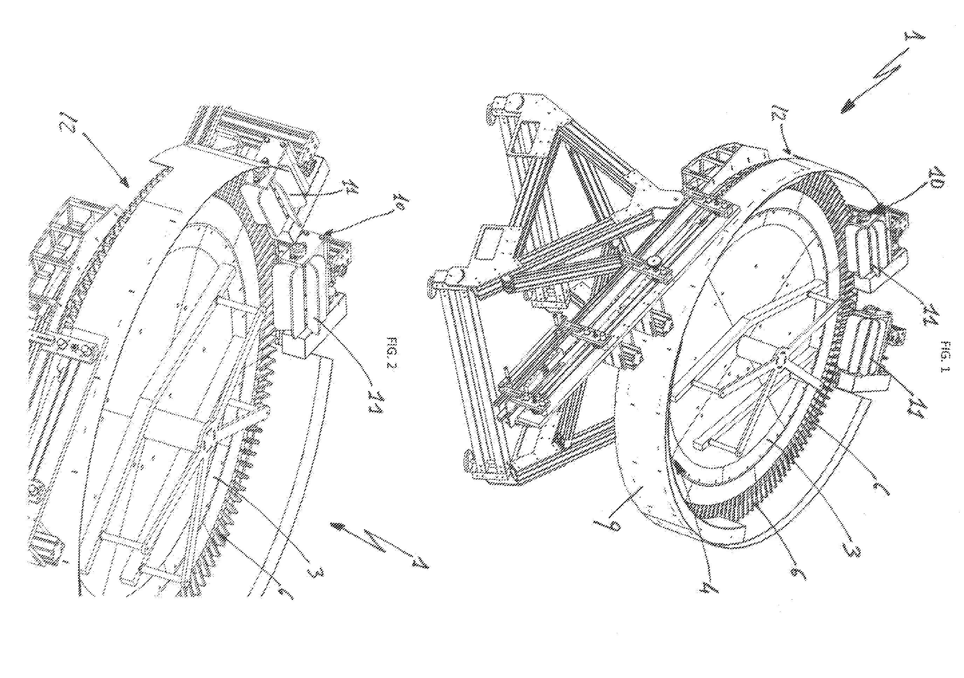

- Figure 1: an apparatus for unscrambling plastic preforms 2, according to the invention
- Figure 2: a detail of the top portion of the unscrambling disk

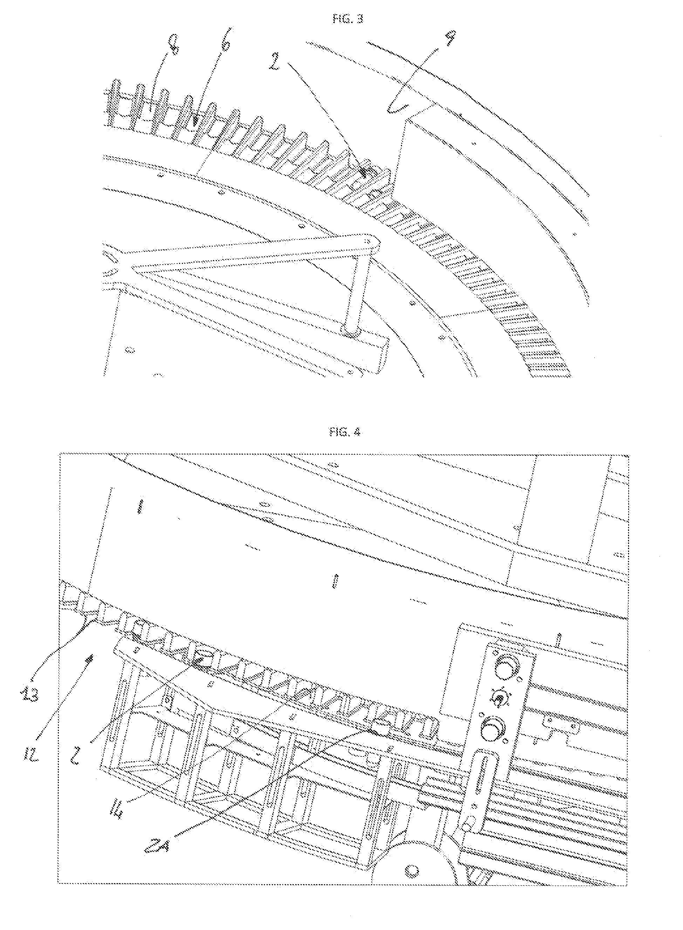

- Figure 3: a detail of the bottom portion of the unscrambling disk
- Figure 4: a detail of the area where the preforms come out of the unscrumbler toward a linear conveyor

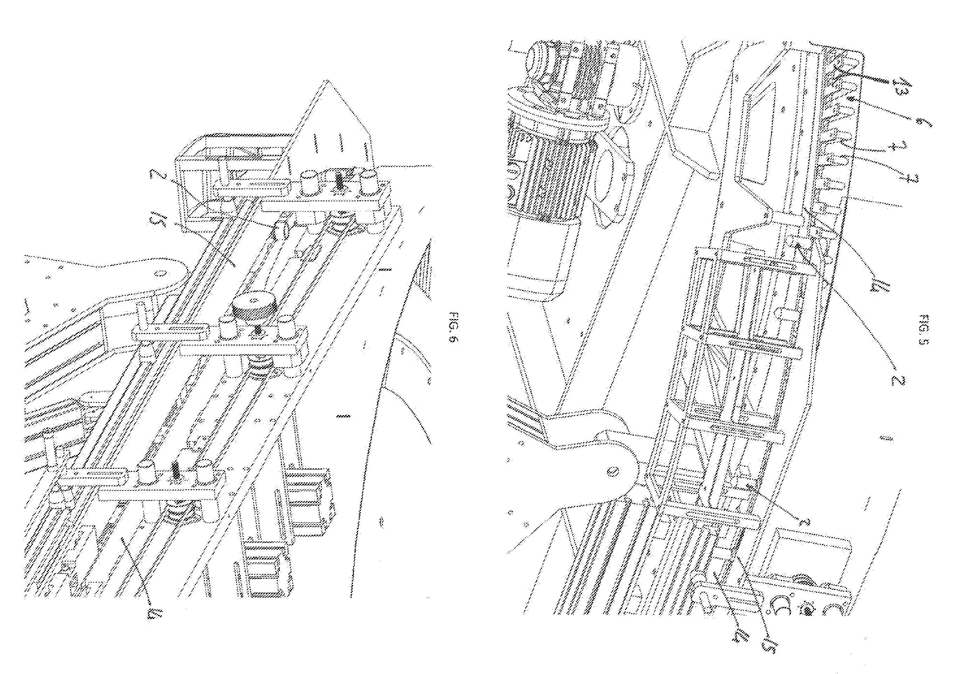

- Figure 5: a detail of the area where the preforms come out of the unscrumbler toward a linear conveyor
- Figure 6: a section of the linear conveyor

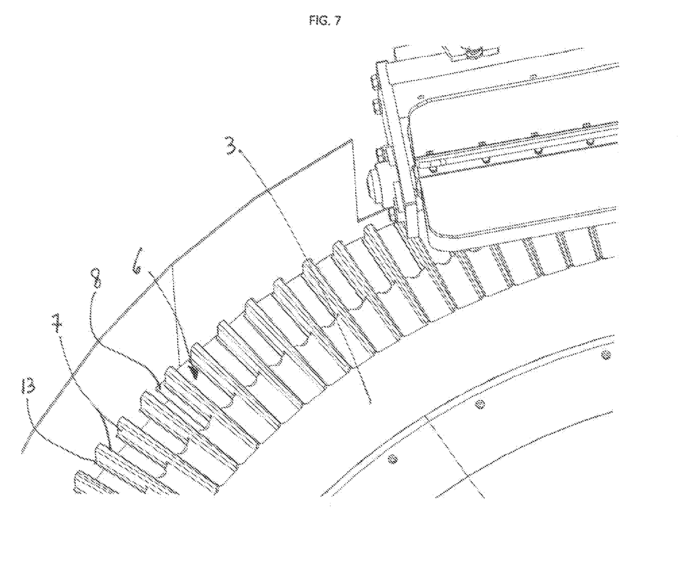

- Figure 7: the radial pockets in detail.

### DESCRIPTION OF THE INVENTION

Particularly referring to the above figures, numeral 1 designates an apparatus for unscrambling plastic preforms 2.

The preforms 2 are cartridges from which plastic bottles are formed by particular heating and blow molding steps; the preforms comprise:
- a pre-threaded cylindrical portion, corresponding to the threaded bottle neck, and then
- a lip ring 2A, i.e. the ring under the neck, whose diameter is greater than the size of the threaded cylindrical portion, for convenient hanging between conveying guides
- a closed-bottom cylindrical portion, which will become the bottle proper after blow molding.

The unscrambling apparatus includes a disk 3 that rotates about an axis inclined to the vertical, so that the preforms 2 that come from above from a special feeder / hopper (not shown), slide toward the lowest portion 4 of the disk 3 - corresponding to the loading area; here, a retaining wall 5 facilitates the introduction of the preforms 2 into a plurality of pockets 6 formed in radial arrangement at the periphery of the disk 3.

These radial pockets 6 have a particular shape that allows loading of one preform at a time and preloading of a new preform, i.e. accommodation of a preform in a radially adjacent pocket, for such preform to slide to the bottom area of the pocket during the next turn, when the preform 2 that was at the bottom of the pocket 6 has been discharged.

Each pocket 6 is defined by side walls 7 and a bottom consisting of a sliding surface 6, that may be fixed or movable to allow any format change, and supports the preforms 2 from below, whereas an outside shell 9, made of a circular laminar plate, prevents the preform 2 from coming out of its pocket 6.

It should be further noted that these pockets may be fixed or removable (and hence replaceable) for easy format change. Replacement is allowed, for instance, by adjusting the distance between the side walls and the bottom, or replacing these parts with ready-to-assemble components; the outside retaining shell may be also possibly replaced, to accommodate longer preforms.

The preforms 2 held in the pockets 6 are carried by disk rotation to the top area 10 of the machine, where blades 11 and/or air blowing devices are also found, both adapted to remove wrongly placed or excess preforms 2, by having them fall along the inclined surface of the disk 3 back to the loading area 4.

The preforms 2 in proper position in their pockets 6 follow their path along the circumference of the disk 3, and are guided in the pockets 6 to the drop area 12.

The sliding surface 8 ends at said drop area 12, whereby the preform is held at the lip ring 2A by two specially sized guides 13, formed on the bottom of both side walls 7: since the preform body is heavier than the threaded portion, these preforms assume a vertical position on these guides 13, all in the same configuration.

A removing plate 14 is located below the drop area 12, and has such a shape as to allow the preforms that reach the plate 14 in a vertical position to be conveyed out of the pocket, such movement being imparted in combination with the rotation of the pocket, still about the inclined axis.

The outside shell 9 also ends, i.e. is absent at the drop area 12, whereby the removing plate 14 can move the preforms out of the pocket 6 beyond the outside diameter of the machine 1.

As the preforms come out of the pockets 6, another plate 15, now parallel to the removing plate 14, will support the preforms on the opposite side.

The preforms are guided by the two plates at their neck and freely slide down along a channel, once they come out of their pockets, toward the machine downstream from the straightening apparatus, which channel may either be fixed or have a variable width, to allow format change.

Thus, the preforms that have been discharged in bulk form into the central disk come out in the same direction, unscrambled and aligned on a linear conveyor, to reach the downstream blow molding machines.

## Claims

1. An apparatus (1) for unscrambling bulk preforms, of the type that comprises a disk (3) rotating about an axis inclined to the vertical, whereby the preforms (2) that come from a special feeder/hopper slide toward the bottom portion (4) where they are loaded into special pockets (6) and rotated to a top drop discharge area (12), from which they are transferred to a conveyor (15); said pockets (6) being formed in radial arrangement at the periphery of the disk (3); and each pocket (6) having such a shape as to allow loading of one preform (2) at a time and preloading of a new preform, to accommodate a preform in a radially adjacent and inner pocket, for such preform to slide to the bottom area of the pocket during the next turn, when the preform (2) at the bottom of the pocket (6) has been discharged; **characterized in that** each pocket (6) has side walls (7) and a fixed or movable sliding surface (8) that supports the preforms (2) from below and an outside shell (9) prevents the preform (2) from coming out of the pocket (6); specially sized guides (13) are formed on the bottom of the side walls (7)

2. An apparatus as claimed in claim 1, **characterized in that** a removing plate (14) is located below the drop area (12), and has such a shape as to allow the preforms that reach the plate (14) in a vertical position to be conveyed out of the pocket, such movement being imparted in combination with the rotation of the pocket (6), still about the inclined axis; the outside shell (9) ends at said area, and the removing plate (14) can move the preforms (2) out of the pocket (6) beyond the outside diameter of the machine (1).
